# EUROPEAN PATENT SPECIFICATION

(11) **EP 0 749 819 B1**
(45) Date of publication and mention of the grant of the patent: **29.08.2001**
(21) Application number: 96109114.7
(22) Date of filing: 07.06.1996
(51) Int. Cl.: B29C 33/12, B29C 33/00, B29C 45/14

(54) **System for directly injecting a plastics frame along the perimeter of a plate, for example of glass**
System zum direkten Umspritzen eines Kunststoffrahmens am Rand einer Platte, z.B. einer Glasplatte
Système pour injecter directement un cadre en matière plastique à la périphérie d'une plaque, par example une plaque de verre

(30) Priority: 20.06.1995 IT MI951320
(43) Date of publication of application: 27.12.1996
(73) Proprietor: FE.RO PLASTICA S.r.l., 21022 Brunello (Varese) (IT)
(72) Inventor: Rovera, Federico, 21026 Voltorre di Gavirate (Varese) (IT)
(74) Representative: Luksch, Giorgio, Dr.-Ing.

(56) References cited:
- EP-A- 0 401 091
- GB-A- 451 507
- KUNSTSTOFFE, vol. 75, no. 7, July 1985, MUNCHEN DE, pages 391-393, XP002014869 B.F. JOHANNSON: "Handhabungsgerät zum vollautomatischen Umspritzen von Abdeckplatten"
- PATENT ABSTRACTS OF JAPAN vol. 013, no. 217 (M-828), 22 May 1989 & JP-A-01 034714 (HASHIMOTO FORMING CO LTD), 6 February 1989,

## Description

This invention relates to a system for directly injecting a plastics frame along the perimeter of a plate, for example of glass, positioned in a mould, according to the preamble of the attached main claim.

With particular but not exclusive reference to the shelves of refrigerators and the like, these are known to comprise a glass plate surrounded by a frame of plastics material directly injected along the plate perimeter. The injection takes place after positioning the plate in a mould defining the compartment or space for forming the frame.

Various types of moulds have been proposed and used. A known type of mould uses rings supported in an elastically yieldable manner in the two mould parts to define the internal perimetral walls of the frame. In this known type the glass plate is centered by centering means positioned in the moulds. Said rings project from the plate contact planes when the mould is opened. In this known type of mould, during their closure the glass is directly stressed precisely because said rings project from the plate contact planes. Considering the mould closure speed and force, there is the danger of the plate breaking. In addition, because of the high pressures concerned, an adequate mechanical seal is not following the retraction of the rings. Moreover, the mould structure is complicated because of the presence of the centering means within the mould, under the thrust of the injected plastics material.

An article of KUNSTSTOFFE magazin (vol. 75, no. 7, July 1985, pages 391-393) discloses a system for directly injecting a frame of plastics material along a perimeter of a plate positioned in a mould; the plate to be framed is centered before being inserted into the mould. The construction of the mould is not disclosed.

GE-A-451507 discloses a mould for framing a glass sheet with plastic material, the mould is devised for not-injectable plastics (bakelite) and comprises a lower mould member, an intermediate inner mould member cooperating with the lower member for pressing the glass sheet and enabling the formation of the lower frame portion and a third mould member containing movably the intermediate mould member and for the formation of the upper frame portion. There is also disclosed a mould wherein the movable intermediate inner mould member is acted upon directly by a stem moving in the same direction. There is further an embodiment where the intermediate mould member is subjected to the action of compression springs. The problem arising from the use of springs is that the pressure exerted by them depends on the thickness of the plate and have to be adjusted according to the thickness.

EP-A-0401 091 discloses a mould for framing a shaped glass sheet, as a windshield, comprising a plurality of pushing sectors located at the periphery of the mould members and on which hydraulic pressure is exerted and which transmit said pressure to moulding formations extending along the whole periphery of the mould. The known device is only justified when used for manufacturing high costs products like windshields.

JP-A-01 0 34714 discloses a method and an apparatus for manufacturing vehicle windows. A mould for forming a frame around the glass is disclosed comprising chambers at its central part and expandable sealing materials at the periphery of the glass, negative pressure being applied to the chambers.

The main object of the present invention is to provide a system by which the aforesaid drawbacks are obviated, hence enabling a high production rate to be used without damaging the plate, to obtain a frame unexceptionable in terms of shape and finish, with perfect plate centering.

This and further objects which will be more apparent from ensuing the detailed description are attained by the teachings of the accompanying claims.

The invention will be better understood from the detailed description of one embodiment thereof provided by way of nonlimiting example and illustrated on the accompanying drawing, in which:
Figure 1 is a schematic cross-section through a closed mould;
Figure 2 is a schematic perspective view of means incorporated in the mould and used for applying and withdrawing a movable slab element to and from the plate to be framed;
Figure 3 is a schematic section on the line III-III of Figure 1;
Figure 4 is a schematic plan view of the arrangement of the apparatus parts of the system according to the invention;
Figure 5 is a schematic plan view of the centering table for the plate to be framed;
Figure 6 is a schematic side view of the centering table and the device for discharging the framed plate.

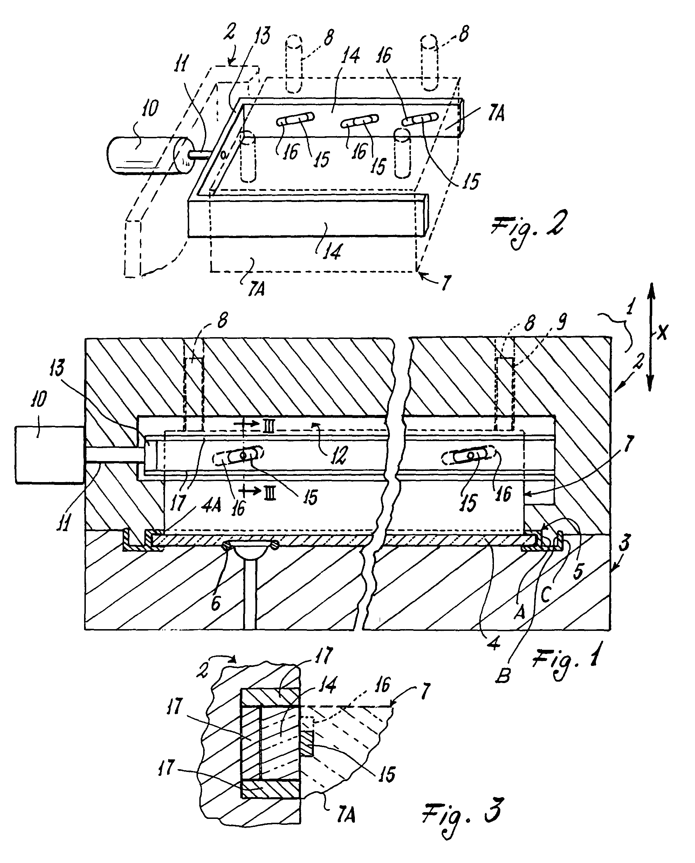

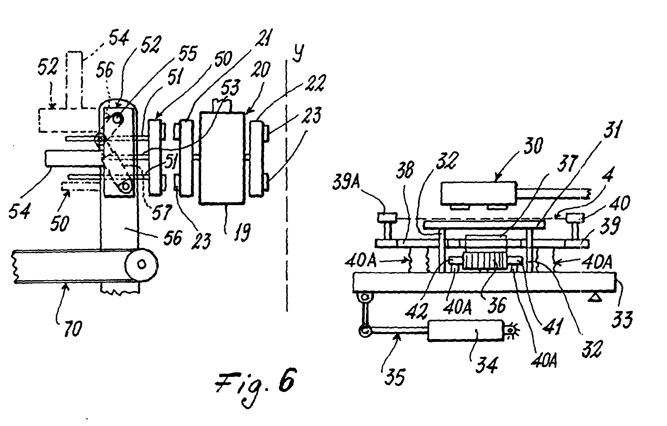

In Figures 1 and 3, the reference numeral 1 indicates the mould overall. It comprises two main components or half-moulds 2, 3 movable relative to each other so as to pass from the closed position of Figure 1 to the open position of Figure 5 and vice versa. The means for achieving such a movement of the two components are well known to the expert of the art, so that their description is superfluous.

In the component 3 there is placed a plate 4 to be framed, for example of glass, of rectangular or square shape, along the perimeter of which a frame indicated by 5 in Figure 1 is to be formed by direct injection of plastics material. The plate is retained in situ by suction in zones defined by 0-rings 6 mounted within the component 3 and connectable to a vacuum source, not shown. The component 3 hence does not comprise movable parts, these obviously not being able to be defined by the 0-rings 6.

The component 2 which together with the component 3 bounds a large part of the forming compartment for the frame 4 with the exception of the inner edge 4A, contains internally, within an open compartment 12, a rigid movable slab element 7 the lower periphery of which bounds the forming compartment in correspondence with the edge 4A of the frame 4. The slab element 7 is shown on the drawing by dashed lines and as a single body for reasons of simplicity. It can however be formed from several parts connected together so as to form a single rigid structure.

The slab element 7 is movable, with limited travel, in the two directions defined by the arrows X, ie perpendicular to the plate 4 (with the plate closed), in the direction both of application to and withdrawal from the plate. By way of example, to guide the slab element 7 in this movement, it can be provided with four fixed columns 8 guided within bushes 9 mounted in holes in the component 2. It is apparent that these guide means can be replaced by other equivalents well known to the expert of the art.

The operating device shown with greater clarity in Figure 2 is provided for said movement of the slab element 7.

It comprises an actuator 10 externally rigid with the component 2. The actuator can advantageously be a stepping motor with male-female screw coupling to a shaft 11 or a double acting hydraulic cylinder, in which case the member indicated by 11 will represent the rod. The shaft or rod 11 passes through a passage in the component 2, in the compartment 12 of this latter it being connected to a slide comprising a cross-member 13, to the ends of which there are connected at right angles two arms 14 which become positioned on the two opposing outer sides 7A of the slab element 7. To three or more spaced-apart points on the inner side of said arms 14 there are fixed cores 15, ie elongate projecting bodies the longitudinal axis of which is inclined to the longitudinal axis of the arms 14, to the direction of movement X of the slab element 7, and to the surface of the plate 4. The cores 15 penetrate into grooves 16 which are likewise inclined but of greater axial length and are provided in those faces 7A of the slab element 7 facing the inner sides of the arms 14 (see Figure 2).

The structure formed by the arms 14 and the cross-member 13 which joins them together moves parallel to the surface of the plate 4 (with the mould closed) when the actuator 10 is operated. For this purpose, for the arms 14 there are provided channel-shaped rectilinear guides formed (Figure 3) from antifriction bronze gibs, rigid with the component 2 and positioned at a right angle. to each other.

As the slab element 7 is guided by the pins 8 perpendicular to the plate 4 (with the mould closed), and as the cores 15 and the grooves 16 are inclined, the movement of the arms 14, under the action of the actuator 10, results in the application of the slab element 7 to the plate 4 and, on termination of the injection, its withdrawal from the plate 4 followed by the opening of the mould.

According to one aspect of the invention, the slab element 7 is applied to the plate 4 to be framed only after the two components 2, 3 are in the closed position. Essentially the two components 2, 3 close with the movement of the press, and only afterwards, ie with the mould closed, is the slab element 7 moved in the direction for applying it to the glass plate 4.

It is apparent that an embodiment which is the reverse of that described falls within the scope of the invention, ie in which the cores 15 are fixed to the slab element 7 and the grooves or windows 16 are provided in the arms 14.

It should be noted that only one of the mould components, namely that indicated by 2, possesses a movable means (the rigid slab element 7) which is applied to the plate 4 to close the formation compartments for the frame 5, but without it being able to yield elastically.

For a better understanding of the ensuing description it should be noted that the mould 1 is positioned in the press such that the plate 4 is in a vertical position, hence the cross-section shown in Figure 1 is taken on a horizontal plane.

When the injection of the frame 5 has been completed, the mould is opened. It will be assumed that this opening results in the component 3 being withdrawn from the component 2, which remains at rest. As the surface area of the plastics material present in the direction (Figure 1) which is in contact with the component 2 is greater than that in contact with the other component (see the two contact surfaces A and B of the component 3 and the contact surface C of the component 3), by the effect of friction the framed plate now remains adhering to the component 2 on leaving the component 3. The shape of the frame must be such as to enable this result to be attained.

The components 2 and 3 arrive in the positions shown in Figure 5, in which the framed plate is indicated by 4X to distinguish it from the plate 4 to be framed.

At this point the framed plate 4X is discharged and a plate 4 to be framed is loaded, already correctly centered, into the component 3.

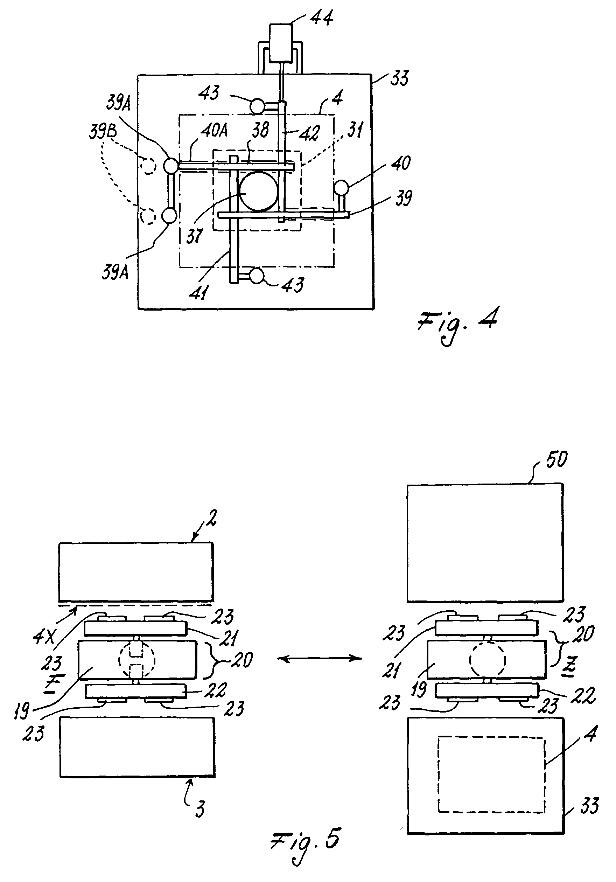

Reference will now be made to Figures 4 to 6, which show that part of the system for removing and discharging the framed plates 4X, for centering the plates 4 to be framed, and for loading these latter into the component 3.

From a store, not shown, in which the plates 4 to be framed are stacked, one is withdrawn by a conventional sucker arm 30 or the like. The arm 30 rests it on a resting surface 31 of substantially smaller dimensions than the smallest plate which the system can process. The plate 4 to be framed is centered thereon. The surface in question is positioned horizontally in this situation.

The resting surface 31 is supported via columns 32 by a table 33 which can be rotated by a double-acting cylinder 34 and a linkage 35 from the horizontal position shown to the vertical position indicated by a dashed line Y and vice versa.

The table 33 supports two coaxial idle gears 36, 37 torsionally rigid with each other. With the gear 37 there engage in diametrically opposite positions two parallel racks 38, 39 slidingly supported in axial guides 40A mounted on the table 33. To the rack 38 there are fixed two locators 39A which reach the level of the plate 4, to the other rack 39 there being fixed only one locator 40 which also reaches the level of the plate 4.

Two racks 41, 42 engage the lower gear 36 in diametrically opposite points. The two racks 41, 42 extend at right angles to the preceding, each carrying a locator 43 at the level of the plate 4. A pressurized fluid-operated double-acting cylinder 44 fixed to the table 33 is connected to the rack 42 to drive the whole assembly.

When the plate 4 is rested on the resting surface 31 it is not perfectly centered, ie its geometrical centre may not coincide with the axis of rotation of the gears 36, 37 and its sides may not be orientated as required for correct positioning in the component 3 of the mould 1.

When the plate 4 is rested on the surface 31 all the locators are in an external position so as not to interfere with the plate 4. For example in the illustrated example the locators 39A are in the position 39B. When the plate 4 has been rested, the cylinder 44 is operated so as to apply all the locators against the plate 4 to centre it, ie to bring it into the position shown by dashed and dotted lines in Figure 4.

The table 33, with the plate 4 clamped between the locators, is then moved into a vertical position by the cylinder 34. In this position, in front of the plate 4 there is a horizontally movable transporter of sucker type indicated overall by 20, having a head 19 carrying a gripper arm 21, 22 on two opposite sides.

Each of the gripper arms 21, 22 is provided with suckers 23 or the like. The gripper arms 21, 22 can be made to withdraw from or approach the head 19 by means of pressurized fluid-operated double-acting cylinders incorporated in the head 19.

The gripper arm 22 situated in front of the vertically positioned plate 4 clamped between the locators 39A, 40, 43 is moved towards the plate 4 to apply its suckers 23 to it and hence retain it. After this the cylinder 44 is operated to withdraw the locators from the plate 4, the plate 4 being withdrawn from the surface 31 by the return of the gripper arm.

At the same time, as will be more apparent hereinafter, a framed plate 4 is passed by the other gripper arm 21 to a rotatable sucker table 50 located in a vertical position and applied to the framed plate 4X.

The rotatable table 50 is mounted at the ends of two guide bars 51 rotatably mounted in a body 52, and is connected to the rod 53 of a pressurized fluid-operated double-acting cylinder 54 mounted on the body 52. The rod 53 can slide within the body 52. The body 52 is rigid with a shaft 55 rotatably supported between a pair of fixed shoulders 56.

External to one of the shoulders 56 the shaft 55 is connected by a connecting rod 56A to a pressurized fluid-operated double-acting cylinder 57 connected to said shoulder.

The cylinder 54 applies the table 50 to the framed plate 4X and then withdraws the table after it has gripped the plate. The cylinder 57 is then operated to move the table 50 into a horizontal position (shown by dashed and dotted lines in Figure 6). The cylinder 54 is then operated to lower the table 50 towards an underlying conveyor belt 70 onto which it discharges the framed plate 4X.

Again considering the plate to be framed now located on the gripper arm 22, the transporter 20 is operated to move it horizontally from the described position indicated by Z in Figure 5 to the position indicated by F in the same figure, ie between the two now spaced-apart components 2 and 3 of the mould, as already indicated. On reaching this position, the gripper arm 22 moves the plate 4 to be framed into the component 3 where it is released, and is there retained by the suction effect of the suction devices 6 (Figure 1).

The other gripper arm, ie the arm 21, applies its suckers or the like to the framed plate 4X present on the component 2 and withdraws it therefrom. It is apparent from the aforegoing that at the end of the return travel of the transporter 20, ie its passage from the position F to the position Z, the framed plate 4X retained by the gripper arm 21 is discharged by the sucker table 50, and the gripper arm 22 loads a new plate to be framed, all as already described.

It is apparent that after the withdrawal of the transporter 20 from the position F, the mould is closed as initially described, and the injection of the frame onto the plate takes place. The working cycle is then repeated sequentially following the aforedescribed steps.

As plates 4 of different shape can be centered, the locators 39A, 40 and 43 can be moved and fixed in different positions along the respective racks, in relation to the different format, taking account of the fact that the cylinder 40 has a predetermined fixed stroke. The means for achieving this are well known to the expert of the art so that their description would be superfluous.

## Claims

1. A system for directly injecting a frame (5) of plastics material along the perimeter of plate (4), for example of glass, positioned in a mould (1), wherein the mould (1) comprises two components (2, 3) movable relative to each other and which, when the components are engaged with each other (mould closed), partially bound a forming compartment for the frame (5), the plate (4) resting on a rigid surface of one (3) of the components and preferably retained by sucker means (6) mounted in said component (3), the other component containing internally a rigid slab element (7) movable away from and towards the plate (4) under the action of a control device comprising at least one actuator (10), **characterised in that** the plate to be framed is centered before being inserted into the mould and the mould (1) comprises a member (13, 14) operated by said actuator (10) in such a manner as to move in a direction perpendicular to the direction of movement of the rigid slab element (7), and mutually engaged means (15, 16) present on said member (13, 14) and on said rigid slab element (7) to achieve the movability of this latter.

2. A system as claimed in claim 1, wherein the member (13, 14) operated by the actuator (10) is a slide on which there are provided a part (15) of the mutually engaged means (15, 16), the other part of these means being associated with the rigid slab element (7).

3. A system as claimed in claims 1 and 2, wherein the mutually engaged means are represented by inclined elongate cores (15) and likewise inclined cooperating elongate grooves or windows (16), the inclination being to both the perpendicular directions of movability of the member (13, 14) and of the slab element (7).

4. A system as claimed in claims 1, 2 and 3, wherein the actuator (10) comprises a stepping motor with male/female screw coupling to the slide (13, 14), or a hydraulic cylinder.

## Patentansprüche

1. System zum direkten Spritzen eines Rahmens (5) aus Kunststoffmaterial entlang des Umfangs einer Platte (4), zum Beispiel aus Glas, die in einer Gußform (1) angeordnet ist, wobei die Gußform (1) zwei Komponenten (2, 3) aufweist, die relativ zueinander bewegbar sind und die, wenn die Komponenten miteinander eingreifen (Gußform geschlossen), teilweise einen Formgebungsraum für den Rahmen (5) begrenzen, wobei die Platte (4) auf einer starren Fläche von einer (3) der Komponenten aufliegt und vorzugsweise durch eine Saugeinrichtung (6) gehalten ist, die in der Komponente (3) vorgesehen ist, wobei die andere Komponente innen ein starres Scheibenelement (7) enthält, das in Richtung auf die Platte (4) und von dieser weg bewegbar ist, und zwar durch Wirkung einer Steuereinrichtung, die zumindest ein Betätigungsmittel (10) aufweist, **dadurch gekennzeichnet**, daß die mit dem Rahmen zu versehende Platte vor dem Einsetzen in die Gußform zentriert wird und daß die Gußform (1) ein Bauteil (13, 14), das durch das Betätigungsmittel (10) auf eine solche Weise betätigt wird, um in einer Richtung senkrecht zu der Bewegungsrichtung des starren Scheibenelements (7) bewegt zu werden, und gegenseitig eingreifende Einrichtungen (15, 16) aufweist, die an dem Bauteil (13, 14) und an dem starren Scheibenelement (7) vorgesehen sind, um die Bewegbarkeit dieses letzteren zu erreichen.

2. System nach Anspruch 1, bei dem das Bauteil (13, 14), das durch das Betätigungsmittel (10) betätigt wird, ein Gleitelement ist, an dem ein Teil (15) der gegenseitig eingreifenden Einrichtungen (15, 16) vorgesehen ist, wobei der andere Teil dieser Einrichtungen mit dem starren Scheibenelement (7) in Beziehung steht.

3. System nach einem der Ansprüche 1 und 2, bei dem die gegenseitig eingreifenden Einrichtungen durch geneigte längliche Vorsprünge (15) und auf ähnliche Weise geneigte zusammenwirkende längliche Nuten oder Fenster (16) realisiert sind, wobei die Neigung sowohl zu den senkrechten Richtungen der Bewegbarkeit des Bauteils (13, 14) als auch des Scheibenelements (7) vorhanden ist.

4. System nach einem der Ansprüche 1, 2 und 3, bei dem das Betätigungsmittel (10) einen Schrittmotor mit einer männlich/weiblichen Schraubenkupplung mit dem Gleitelement (13, 14) oder einen hydraulischen Zylinder enthält.

## Revendications

1. Système pour injecter directement un cadre (5) en matière plastique à la périphérie d'une plaque (4), par exemple une plaque de verre, positionnée dans un moule (1), dans lequel le moule (1) comprend deux composants (2, 3) mobiles l'un par rapport à l'autre et qui, lorsque les composants sont engagés l'un avec l'autre (moule fermé), délimitent partiellement un compartiment de moulage pour le cadre (5), la plaque (4) reposant sur une surface rigide de l'un (3) des composants et étant de préférence retenue par un moyen d'aspiration (6) monté dans ledit composant (3), l'autre composant contenant intérieurement un plateau rigide (7) apte à être éloigné et rapproché de la plaque (4) par un dispositif de commande comprenant au moins un actionneur (10), **caractérisé en ce que** la plaque à encadrer est centrée avant d'être insérée dans le moule et en ce que le moule (1) comprend un élément (13, 14) commandé par ledit actionneur (10) de manière à se déplacer dans une direction perpendiculaire à la direction de déplacement du plateau rigide (7), et des moyens complémentaires (15, 16) présents sur ledit élément (13, 14) et sur ledit plateau rigide (7) pour assurer la mobilité de ce dernier.

2. Système selon la revendication 1, **caractérisé en ce que** l'élément (13, 14) commandé par l'actionneur (10) est un coulisseau sur lequel est prévue une partie (15) des moyens complémentaires (15, 16), l'autre partie desdits moyens étant associée au plateau rigide (7).

3. Système selon les revendications 1 et 2, **caractérisé en ce que** les moyens complémentaires sont constitués par des corps oblongs inclinés (15) et des encoches ou fenêtres (16) complémentaires, d'inclinaison correspondante, lesdits moyens étant inclinés à la fois par rapport à la direction de déplacement de l'élément (13, 14) et par rapport à la direction de déplacement du plateau (7), qui est perpendiculaire à la précédente.

4. Système selon les revendications 1, 2 et 3, **caractérisé en ce que** l'actionneur (10) comprend un moteur pas à pas doté d'un accouplement à vis mâle/femelle avec le coulisseau (13, 14), ou un vérin hydraulique.
